# EUROPEAN PATENT APPLICATION

(11) **EP 4 780 121 A1**
(43) Date of publication of application: **22.07.2026**
(21) Application number: 24870342.3
(22) Date of filing: 02.09.2024
(51) Int. Cl.: H04W 74/08

(54) **COMMUNICATION METHOD AND APPARATUS**

(30) Priority: 28.09.2023 CN 202311292753
(71) Applicant: HUAWEI TECHNOLOGIES CO., LTD., Shenzhen 518129 (CN)
(72) Inventor: SUN, Huan, Shenzhen, Guangdong 518129 (CN); LUO, Zhihu, Shenzhen, Guangdong 518129 (CN)
(74) Representative: Isarpatent
(86) International application number: PCT/CN2024/116280
(87) International publication number: WO 2025/066796

(57) **Abstract**

This application provides a communication method and apparatus, to perform coverage enhancement on a message, for example, a Msg4. The method includes: sending at least one of the following information: a preamble or a logical channel identifier, where the information is used to request a network device to send, in a repeated transmission manner, a first message that carries contention resolution information in a random access procedure; and receiving the first message. In this application, the preamble or the logical channel identifier is used to request the network device to repeatedly transmit the first message, so that coverage enhancement of the first message can be implemented, a success rate of random access can be improved, a communication delay can be reduced, and a coverage area of a terminal device can be further improved.

## Description

### CROSS-REFERENCE TO RELATED APPLICATIONS

This application claims priority to Chinese Patent Application No. 202311292753.X, filed with the China National Intellectual Property Administration on September 28, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, it is proposed to expand a coverage area of a network device by reducing an edge rate. However, after the rate is reduced, signal losses occur on some channels such as a message 2 (message 2, Msg2), a physical uplink shared channel (physical uplink share channel, PUSCH), and a message 4 (message 4, Msg4). Coverage enhancement of the Msg2 channel and the PUSCH channel has been supported in an existing protocol. The PUSCH channel may support a plurality of repetitions through time domain resource assignment (time domain resource assignment, TDRA) configuration of downlink control information (downlink control information, DCI), to implement coverage enhancement. The Msg2 channel may implement transport block scaling based on a transport block (transmission block, TB) scaling (scaling) field, to improve coverage. However, currently, how to perform coverage enhancement on another message like the Msg4 is not defined in a protocol.

### SUMMARY

This application provides a communication method and apparatus, to perform coverage enhancement on a message, for example, a Msg4.

According to a first aspect, a communication method is provided. The method may be performed by a terminal device or a chip, a chip system, or a circuit located in a terminal device. The method may be implemented by using the following steps: sending first information, where the first information is used to request a network device to send, in a repeated transmission manner, a first message that carries contention resolution information in a random access procedure, and the first information includes at least one of the following: a preamble or a logical channel identifier; and receiving the first message.

In this application, the preamble or the logical channel identifier is used to request the network device to repeatedly transmit the first message, so that coverage enhancement of the first message can be implemented, a success rate of random access can be improved, a communication delay can be reduced, and a coverage area of the terminal device can be further improved.

In a possible design, that the first information is used to request the network device to send the first message in a random access procedure through repeated transmission includes: The first information includes a first preamble, and the first preamble is used to request to send the first message in a repeated transmission manner. In this manner, repeated transmission of the first message is requested by using the preamble, so that signaling overheads can be reduced.

In a possible design, the first preamble belongs to a preamble set, the preamble set may further include a second preamble, the second preamble indicates repeated transmission of a second message in a random access procedure, and the second message is carried on a physical uplink shared channel. In this manner, repeated transmission of the first message or the second message can be flexibly scheduled.

In a possible design, the first preamble is further used to request to send a second message in a random access procedure in a repeated transmission manner, and the second message is carried on a physical uplink shared channel. In this manner, repeated scheduling of the first message and the second message can be simultaneously scheduled, thereby reducing signaling overheads.

In a possible design, that the first information is used to request the network device to send the first message in a random access procedure through repeated transmission includes: The first information is carried in a first random access resource, and the first random access resource is used to request to send the first message in a repeated transmission manner. In this manner, repeated transmission of the first message is requested in the random access resource, so that signaling overheads can be reduced.

In a possible design, that the first information is used to request the network device to send the first message in a random access procedure through repeated transmission includes: The first information includes a first logical channel identifier, and the first logical channel identifier is used to request to send the first message in a repeated transmission manner. In this manner, repeated transmission of the first message is requested by using the logical channel identifier, so that signaling overheads can be reduced.

In a possible design, a value of the first logical channel identifier is 39, 40, 41, 42, or 47.

In a possible design, before sending the first information, the method further includes: receiving second information, where the second information indicates a priority of repeated transmission of the first message.

In a possible design, the second information is included in a system information block 1.

In a possible design, the method is applied to a four-step random access procedure.

In a possible design, the first message is a Msg4.

In a possible design, the second message is a Msg3.

In a possible design, after sending the first information, the method further includes: receiving downlink control information (DCI), where the DCI is scrambled by using a temporary cell-radio network temporary identifier (TC-RNTI), the DCI indicates configuration information of repeated transmission of a first message in a random access procedure, and the first message carries contention resolution information; and the first message is received based on the configuration information.

Repeated transmission of the first message is configured based on the DCI scrambled by using the TC-RNTI, so that the terminal device can obtain a related configuration of repeated transmission of the first message before transmitting the first message. This helps improve transmission performance of the first message, further improve a success rate of a random access procedure, and reduce a communication delay.

In a possible design, that the DCI indicates the configuration information of repeated transmission of the first message in a random access procedure includes: A modulation and coding scheme (MCS) field in the DCI indicates a quantity of repeated transmissions of the first message. In this manner, repeated transmission of the first message is configured by multiplexing the MCS field, so that signaling overheads can be reduced.

In a possible design, that the MCS field in the DCI indicates the quantity of repeated transmissions of the first message includes: Some most significant bits (MSBs) of the MCS field indicate the quantity of repeated transmissions of the first message.

In a possible design, that the DCI indicates the configuration information of repeated transmission of the first message in a random access procedure includes: A downlink assignment index field in the DCI indicates a quantity of repeated transmissions of the first message. In this manner, repeated transmission of the first message is configured by multiplexing the downlink assignment index field, so that signaling overheads can be reduced.

In a possible design, a downlink assignment index field in the DCI indicates repeated transmission or non-repeated transmission of the first message, and an MCS field in the DCI indicates a quantity of repeated transmissions of the first message when the downlink assignment index field indicates repeated transmission of the first message. In this manner, repeated transmission of the first message is configured by multiplexing the MCS field and the downlink assignment index field, so that signaling overheads can be reduced.

In a possible design, that the downlink assignment index field in the DCI indicates repeated transmission or non-repeated transmission of the first message includes: 1 bit in the downlink assignment index field indicates repeated transmission or non-repeated transmission of the first message.

In a possible design, that the MCS field indicates, when the downlink assignment index field indicates repeated transmission of the first message, the quantity of repeated transmissions of the first message includes: some MSBs of the MCS field indicate the quantity of repeated transmissions of the first message when the downlink assignment index field indicates repeated transmission of the first message.

In a possible design, an MCS field in the DCI indicates repeated transmission or non-repeated transmission of the first message, and a downlink assignment index field in the DCI indicates a quantity of repeated transmissions of the first message when the MCS field indicates repeated transmission of the first message. In this manner, repeated transmission of the first message is configured by multiplexing the MCS field and the downlink assignment index field, so that signaling overheads can be reduced.

In a possible design, that the MCS field indicates repeated transmission or non-repeated transmission of the first message includes: One most significant bit of the MCS field indicates repeated transmission or non-repeated transmission of the first message.

In a possible design, the DCI format is a format 1-0.

In a possible design, after sending the first information, the method further includes: receiving a random access response uplink grant (RAR UL grant), where the RAR UL grant indicates configuration information of repeated transmission of a first message in a random access procedure, and the first message carries contention resolution information; and receiving the first message based on the configuration information.

Repeated transmission of the first message is configured by using the RAR UL grant, so that the terminal device can obtain a related configuration of repeated transmission of the first message before transmitting the first message. This helps improve transmission performance of the first message, further improve a success rate of a random access procedure, and reduce a communication delay.

In a possible design, that the RAR UL grant indicates the configuration information of repeated transmission of the first message in a random access procedure includes: A time domain resource assignment field in the RAR UL grant indicates the configuration information of repeated transmission of the first message. In this manner, repeated transmission of the first message is configured by multiplexing the time domain resource assignment field, so that signaling overheads can be reduced.

In a possible design, N statuses of the time domain resource assignment field one-to-one correspond to N repeated transmissions, and N is an integer greater than 0.

In a possible design, that the RAR UL grant indicates the configuration information of repeated transmission of the first message in a random access procedure includes: A frequency domain resource assignment field and a frequency hopping field in the RAR UL grant indicate the configuration information of repeated transmission of the first message. In this manner, repeated transmission of the first message is configured by multiplexing the frequency domain resource assignment field and the frequency hopping field, so that signaling overheads can be reduced.

In a possible design, that the frequency domain resource assignment field and the frequency hopping field indicate the configuration information of repeated transmission of the first message includes: P bits indicate a quantity of repeated transmissions of the first message, the P bits include at least one bit in the frequency domain resource assignment field and at least one bit in the frequency hopping field, and P is an integer greater than 1.

According to a second aspect, a communication method is provided. The method may be performed by a network device or a chip, a chip system, or a circuit located in a network device. The method may be implemented by using the following steps: receiving first information, where the first information is used to request a network device to send a first message in a random access procedure through repeated transmission, the first message carries contention resolution information, and the first information includes at least one of the following: a preamble or a logical channel identifier; and sending the first message in a repeated transmission manner.

In this application, the preamble or the logical channel identifier is used to request the network device to repeatedly transmit the first message, so that coverage enhancement of the first message can be implemented, a success rate of random access can be improved, a communication delay can be reduced, and a coverage area of the terminal device can be further improved.

In a possible design, that the first information is used to request the network device to send the first message in a random access procedure through repeated transmission includes: The first information includes a first preamble, and the first preamble is used to request to send the first message in a repeated transmission manner. In this manner, repeated transmission of the first message is requested by using the preamble, so that signaling overheads can be reduced.

In a possible design, the first preamble belongs to a preamble set, the preamble set may further include a second preamble, the second preamble indicates repeated transmission of a second message in a random access procedure, and the second message is carried on a physical uplink shared channel. In this manner, repeated transmission of the first message or the second message can be flexibly scheduled.

In a possible design, the first preamble is further used to request to send a second message in a random access procedure in a repeated transmission manner, and the second message is carried on a physical uplink shared channel. In this manner, repeated scheduling of the first message and the second message can be simultaneously scheduled, thereby reducing signaling overheads.

In a possible design, that the first information is used to request the network device to send the first message in a random access procedure through repeated transmission includes: The first information is carried in a first random access resource, and the first random access resource is used to request to send the first message in a repeated transmission manner. In this manner, repeated transmission of the first message is requested in the random access resource, so that signaling overheads can be reduced.

In a possible design, that the first information is used to request the network device to send the first message in a random access procedure through repeated transmission includes: The first information includes a first logical channel identifier, and the first logical channel identifier is used to request to send the first message in a repeated transmission manner. In this manner, repeated transmission of the first message is requested by using the logical channel identifier, so that signaling overheads can be reduced.

In a possible design, a value of the first logical channel identifier is 39, 40, 41, 42, or 47.

In a possible design, before receiving the first information, the method further includes: sending second information, where the second information indicates a priority of repeated transmission of the first message.

In a possible design, the second information is included in a system information block 1.

In a possible design, the method is applied to a four-step random access procedure.

In a possible design, the first message is a Msg4.

In a possible design, the second message is a Msg3.

In a possible design, after receiving the first information, the method further includes: sending DCI, where the DCI is scrambled by using a TC-RNTI, the DCI indicates configuration information of repeated transmission of a first message in a random access procedure, and the first message carries contention resolution information; and sending the first message based on the configuration information.

Repeated transmission of the first message is configured based on the DCI scrambled by using the TC-RNTI, so that the terminal device can obtain a related configuration of repeated transmission of the first message before transmitting the first message. This helps improve transmission performance of the first message, further improve a success rate of a random access procedure, and reduce a communication delay.

In a possible design, that the DCI indicates the configuration information of repeated transmission of the first message in a random access procedure includes: An MCS field in the DCI indicates a quantity of repeated transmissions of the first message. In this manner, repeated transmission of the first message is configured by multiplexing the MCS field, so that signaling overheads can be reduced.

In a possible design, that the MCS field in the DCI indicates the quantity of repeated transmissions of the first message includes: Some MSBs of the MCS field indicate the quantity of repeated transmissions of the first message.

In a possible design, that the DCI indicates the configuration information of repeated transmission of the first message in a random access procedure includes: A downlink assignment index field in the DCI indicates a quantity of repeated transmissions of the first message. In this manner, repeated transmission of the first message is configured by multiplexing the downlink assignment index field, so that signaling overheads can be reduced.

In a possible design, a downlink assignment index field in the DCI indicates repeated transmission or non-repeated transmission of the first message, and an MCS field in the DCI indicates a quantity of repeated transmissions of the first message when the downlink assignment index field indicates repeated transmission of the first message. In this manner, repeated transmission of the first message is configured by multiplexing the MCS field and the downlink assignment index field, so that signaling overheads can be reduced.

In a possible design, that the downlink assignment index field in the DCI indicates repeated transmission or non-repeated transmission of the first message includes: 1 bit in the downlink assignment index field indicates repeated transmission or non-repeated transmission of the first message.

In a possible design, that the MCS field indicates, when the downlink assignment index field indicates repeated transmission of the first message, the quantity of repeated transmissions of the first message includes: some MSBs of the MCS field indicate the quantity of repeated transmissions of the first message when the downlink assignment index field indicates repeated transmission of the first message.

In a possible design, an MCS field in the DCI indicates repeated transmission or non-repeated transmission of the first message, and a downlink assignment index field in the DCI indicates a quantity of repeated transmissions of the first message when the MCS field indicates repeated transmission of the first message. In this manner, repeated transmission of the first message is configured by multiplexing the MCS field and the downlink assignment index field, so that signaling overheads can be reduced.

In a possible design, that the MCS field indicates repeated transmission or non-repeated transmission of the first message includes: One most significant bit of the MCS field indicates repeated transmission or non-repeated transmission of the first message.

In a possible design, the DCI format is a format 1-0.

In a possible design, after receiving the first information, the method further includes: sending an RAR UL grant, where the RAR UL grant indicates configuration information of repeated transmission of a first message in a random access procedure, and the first message carries contention resolution information; and sending the first message based on the configuration information.

Repeated transmission of the first message is configured by using the RAR UL grant, so that the terminal device can obtain a related configuration of repeated transmission of the first message before transmitting the first message. This helps improve transmission performance of the first message, further improve a success rate of a random access procedure, and reduce a communication delay.

In a possible design, that the RAR UL grant indicates the configuration information of repeated transmission of the first message in a random access procedure includes: A time domain resource assignment field in the RAR UL grant indicates the configuration information of repeated transmission of the first message. In this manner, repeated transmission of the first message is configured by multiplexing the time domain resource assignment field, so that signaling overheads can be reduced.

In a possible design, N statuses of the time domain resource assignment field one-to-one correspond to N repeated transmissions, and N is an integer greater than 0.

In a possible design, that the RAR UL grant indicates the configuration information of repeated transmission of the first message in a random access procedure includes: A frequency domain resource assignment field and a frequency hopping field in the RAR UL grant indicate the configuration information of repeated transmission of the first message. In this manner, repeated transmission of the first message is configured by multiplexing the frequency domain resource assignment field and the frequency hopping field, so that signaling overheads can be reduced.

In a possible design, that the frequency domain resource assignment field and the frequency hopping field indicate the configuration information of repeated transmission of the first message includes: P bits indicate a quantity of repeated transmissions of the first message, the P bits include at least one bit in the frequency domain resource assignment field and at least one bit in the frequency hopping field, and P is an integer greater than 1.

According to a third aspect, a communication method is provided. The method may be performed by a terminal device or a chip, a chip system, or a circuit located in a terminal device. The method may be implemented by using the following steps: receiving DCI, where the DCI is scrambled by using a TC-RNTI, the DCI indicates configuration information of repeated transmission of a first message in a random access procedure, and the first message carries contention resolution information; and receiving the first message based on the configuration information.

In this application, repeated transmission of the first message is configured based on the DCI scrambled by using the TC-RNTI, so that the terminal device can obtain a related configuration of repeated transmission of the first message before transmitting the first message. This helps improve transmission performance of the first message, further improve a success rate of a random access procedure, and reduce a communication delay.

In a possible design, that the DCI indicates the configuration information of repeated transmission of the first message in a random access procedure includes: An MCS field in the DCI indicates a quantity of repeated transmissions of the first message. In this manner, repeated transmission of the first message is configured by multiplexing the MCS field, so that signaling overheads can be reduced.

In a possible design, that the MCS field in the DCI indicates the quantity of repeated transmissions of the first message includes: Some MSBs of the MCS field indicate the quantity of repeated transmissions of the first message.

In a possible design, that the DCI indicates the configuration information of repeated transmission of the first message in a random access procedure includes: A downlink assignment index field in the DCI indicates a quantity of repeated transmissions of the first message. In this manner, repeated transmission of the first message is configured by multiplexing the downlink assignment index field, so that signaling overheads can be reduced.

In a possible design, a downlink assignment index field in the DCI indicates repeated transmission or non-repeated transmission of the first message, and an MCS field in the DCI indicates a quantity of repeated transmissions of the first message when the downlink assignment index field indicates repeated transmission of the first message. In this manner, repeated transmission of the first message is configured by multiplexing the MCS field and the downlink assignment index field, so that signaling overheads can be reduced.

In a possible design, that the downlink assignment index field in the DCI indicates repeated transmission or non-repeated transmission of the first message includes: 1 bit in the downlink assignment index field indicates repeated transmission or non-repeated transmission of the first message.

In a possible design, that the MCS field indicates, when the downlink assignment index field indicates repeated transmission of the first message, the quantity of repeated transmissions of the first message includes: some MSBs of the MCS field indicate the quantity of repeated transmissions of the first message when the downlink assignment index field indicates repeated transmission of the first message.

In a possible design, an MCS field in the DCI indicates repeated transmission or non-repeated transmission of the first message, and a downlink assignment index field in the DCI indicates a quantity of repeated transmissions of the first message when the MCS field indicates repeated transmission of the first message. In this manner, repeated transmission of the first message is configured by multiplexing the MCS field and the downlink assignment index field, so that signaling overheads can be reduced.

In a possible design, that the MCS field indicates repeated transmission or non-repeated transmission of the first message includes: One most significant bit of the MCS field indicates repeated transmission or non-repeated transmission of the first message.

In a possible design, the DCI format is a format 1-0.

In a possible design, before sending first information, the method further includes: receiving second information, where the second information indicates a priority of repeated transmission of the first message.

In a possible design, the second information is included in a system information block 1.

In a possible design, the method is applied to a four-step random access procedure.

In a possible design, the first message is a Msg4.

According to a fourth aspect, a communication method is provided. The method may be performed by a network device or a chip, a chip system, or a circuit located in a network device. The method may be implemented by using the following steps: sending DCI, where the DCI is scrambled by using a TC-RNTI, the DCI indicates configuration information of repeated transmission of a first message in a random access procedure, and the first message carries contention resolution information; and sending the first message based on the configuration information.

In this application, repeated transmission of the first message is configured based on the DCI scrambled by using the TC-RNTI, so that the terminal device can obtain a related configuration of repeated transmission of the first message before transmitting the first message. This helps improve transmission performance of the first message, further improve a success rate of a random access procedure, and reduce a communication delay.

In a possible design, that the DCI indicates the configuration information of repeated transmission of the first message in a random access procedure includes: An MCS field in the DCI indicates a quantity of repeated transmissions of the first message. In this manner, repeated transmission of the first message is configured by multiplexing the MCS field, so that signaling overheads can be reduced.

In a possible design, that the MCS field in the DCI indicates the quantity of repeated transmissions of the first message includes: Some MSBs of the MCS field indicate the quantity of repeated transmissions of the first message.

In a possible design, that the DCI indicates the configuration information of repeated transmission of the first message in a random access procedure includes: A downlink assignment index field in the DCI indicates a quantity of repeated transmissions of the first message. In this manner, repeated transmission of the first message is configured by multiplexing the downlink assignment index field, so that signaling overheads can be reduced.

In a possible design, a downlink assignment index field in the DCI indicates repeated transmission or non-repeated transmission of the first message, and an MCS field in the DCI indicates a quantity of repeated transmissions of the first message when the downlink assignment index field indicates repeated transmission of the first message. In this manner, repeated transmission of the first message is configured by multiplexing the MCS field and the downlink assignment index field, so that signaling overheads can be reduced.

In a possible design, that the downlink assignment index field in the DCI indicates repeated transmission or non-repeated transmission of the first message includes: 1 bit in the downlink assignment index field indicates repeated transmission or non-repeated transmission of the first message.

In a possible design, that the MCS field indicates, when the downlink assignment index field indicates repeated transmission of the first message, the quantity of repeated transmissions of the first message includes: some MSBs of the MCS field indicate the quantity of repeated transmissions of the first message when the downlink assignment index field indicates repeated transmission of the first message.

In a possible design, an MCS field in the DCI indicates repeated transmission or non-repeated transmission of the first message, and a downlink assignment index field in the DCI indicates a quantity of repeated transmissions of the first message when the MCS field indicates repeated transmission of the first message. In this manner, repeated transmission of the first message is configured by multiplexing the MCS field and the downlink assignment index field, so that signaling overheads can be reduced.

In a possible design, that the MCS field indicates repeated transmission or non-repeated transmission of the first message includes: One most significant bit of the MCS field indicates repeated transmission or non-repeated transmission of the first message.

In a possible design, the DCI format is a format 1-0.

In a possible design, before receiving first information, the method further includes: sending second information, where the second information indicates a priority of repeated transmission of the first message.

In a possible design, the second information is included in a system information block 1.

In a possible design, the method is applied to a four-step random access procedure.

In a possible design, the first message is a Msg4.

According to a fifth aspect, a communication method is provided. The method may be performed by a terminal device or a chip, a chip system, or a circuit located in a terminal device. The method may be implemented by using the following steps: receiving an RAR UL grant, where the RAR UL grant indicates configuration information of repeated transmission of a first message in a random access procedure, and the first message carries contention resolution information; and receiving the first message based on the configuration information.

In this application, repeated transmission of the first message is configured by using the RAR UL grant, so that the terminal device can obtain a related configuration of repeated transmission of the first message before transmitting the first message. This helps improve transmission performance of the first message, further improve a success rate of a random access procedure, and reduce a communication delay.

In a possible design, that the RAR UL grant indicates the configuration information of repeated transmission of the first message in a random access procedure includes: A time domain resource assignment field in the RAR UL grant indicates the configuration information of repeated transmission of the first message. In this manner, repeated transmission of the first message is configured by multiplexing the time domain resource assignment field, so that signaling overheads can be reduced.

In a possible design, N statuses of the time domain resource assignment field one-to-one correspond to N repeated transmissions, and N is an integer greater than 0.

In a possible design, that the RAR UL grant indicates the configuration information of repeated transmission of the first message in a random access procedure includes: A frequency domain resource assignment field and a frequency hopping field in the RAR UL grant indicate the configuration information of repeated transmission of the first message. In this manner, repeated transmission of the first message is configured by multiplexing the frequency domain resource assignment field and the frequency hopping field, so that signaling overheads can be reduced.

In a possible design, that the frequency domain resource assignment field and the frequency hopping field indicate the configuration information of repeated transmission of the first message includes: P bits indicate a quantity of repeated transmissions of the first message, the P bits include at least one bit in the frequency domain resource assignment field and at least one bit in the frequency hopping field, and P is an integer greater than 1.

In a possible design, before sending first information, the method further includes: receiving second information, where the second information indicates a priority of repeated transmission of the first message.

In a possible design, the second information is included in a system information block 1.

In a possible design, the method is applied to a four-step random access procedure.

In a possible design, the first message is a Msg4.

According to a sixth aspect, a communication method is provided. The method may be performed by a network device or a chip, a chip system, or a circuit located in a network device. The method may be implemented by using the following steps: sending a random access response uplink grant (RAR UL grant), where the RAR UL grant indicates configuration information of repeated transmission of a first message in a random access procedure, and the first message carries contention resolution information; and sending the first message based on the configuration information.

In this application, repeated transmission of the first message is configured by using the RAR UL grant, so that a terminal device can obtain a related configuration of repeated transmission of the first message before transmitting the first message. This helps improve transmission performance of the first message, further improve a success rate of a random access procedure, and reduce a communication delay.

In a possible design, that the RAR UL grant indicates the configuration information of repeated transmission of the first message in a random access procedure includes: A time domain resource assignment field in the RAR UL grant indicates the configuration information of repeated transmission of the first message. In this manner, repeated transmission of the first message is configured by multiplexing the time domain resource assignment field, so that signaling overheads can be reduced.

In a possible design, N statuses of the time domain resource assignment field one-to-one correspond to N repeated transmissions, and N is an integer greater than 0.

In a possible design, that the RAR UL grant indicates the configuration information of repeated transmission of the first message in a random access procedure includes: A frequency domain resource assignment field and a frequency hopping field in the RAR UL grant indicate the configuration information of repeated transmission of the first message. In this manner, repeated transmission of the first message is configured by multiplexing the frequency domain resource assignment field and the frequency hopping field, so that signaling overheads can be reduced.

In a possible design, that the frequency domain resource assignment field and the frequency hopping field indicate the configuration information of repeated transmission of the first message includes: P bits indicate a quantity of repeated transmissions of the first message, the P bits include at least one bit in the frequency domain resource assignment field and at least one bit in the frequency hopping field, and P is an integer greater than 1.

In a possible design, before receiving first information, the method further includes: sending second information, where the second information indicates a priority of repeated transmission of the first message.

In a possible design, the second information is included in a system information block 1.

In a possible design, the method is applied to a four-step random access procedure.

In a possible design, the first message is a Msg4.

According to a seventh aspect, this application further provides a communication apparatus. The apparatus is a terminal device or a chip in a terminal device. The communication apparatus has a function of implementing any method provided in the first aspect, the third aspect, or the fifth aspect. The communication apparatus may be implemented by hardware, or may be implemented by executing corresponding software by hardware. The hardware or software includes one or more units or modules corresponding to the foregoing functions.

In a possible design, the communication apparatus includes a processor. The processor is configured to support the communication apparatus in performing a corresponding function of the terminal device in the foregoing method. The communication apparatus further includes a memory, and the memory may be coupled to the processor, and stores program instructions and data that are necessary for the communication apparatus. Optionally, the communication apparatus further includes an interface circuit. The interface circuit is configured to support communication between the communication apparatus and a device like a service satellite, for example, data or signal receiving and sending. For example, the communication interface may be a transceiver, a circuit, a bus, a module, or another type of communication interface.

In a possible design, the communication apparatus includes corresponding functional modules respectively configured to implement the steps in the foregoing methods. The function may be implemented by hardware, or may be implemented by executing corresponding software by hardware. The hardware or software includes one or more modules corresponding to the foregoing functions.

In a possible design, a structure of the communication apparatus includes a processing unit (or a processing unit) and a communication unit (or a communication unit). These units may perform corresponding functions in the foregoing method example. For details, refer to the descriptions in the method according to the first aspect, the third aspect, or the fifth aspect. Details are not described herein again.

According to an eighth aspect, this application further provides a communication apparatus. The apparatus is a network device or a chip in a network device. The communication apparatus has a function of implementing any method provided in the second aspect, the fourth aspect, or the sixth aspect. The communication apparatus may be implemented by hardware, or may be implemented by executing corresponding software by hardware. The hardware or software includes one or more units or modules corresponding to the foregoing functions.

In a possible design, the communication apparatus includes a processor. The processor is configured to support the communication apparatus in performing a corresponding function of the service satellite shown in the foregoing method. The communication apparatus further includes a memory, and the memory may be coupled to the processor, and stores program instructions and data that are necessary for the communication apparatus. Optionally, the communication apparatus further includes an interface circuit. The interface circuit is configured to support communication between the communication apparatus and a device like a terminal device, for example, data or signal receiving and sending. For example, the communication interface may be a transceiver, a circuit, a bus, a module, or another type of communication interface.

In a possible design, the communication apparatus includes corresponding functional modules respectively configured to implement the steps in the foregoing methods. The function may be implemented by hardware, or may be implemented by executing corresponding software by hardware. The hardware or software includes one or more modules corresponding to the foregoing functions.

In a possible design, a structure of the communication apparatus includes a processing unit (or a processing unit) and a communication unit (or a communication unit). These units may perform corresponding functions in the foregoing method example. For details, refer to the description in the method according to the second aspect, the fourth aspect, or the sixth aspect. Details are not described herein again.

According to a ninth aspect, a communication apparatus is provided. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method according to the first aspect, the third aspect, or the fifth aspect and any possible design through a logic circuit or by executing code instructions.

According to a tenth aspect, a communication apparatus is provided. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method according to the second aspect, the fourth aspect, or the sixth aspect and any possible design through a logic circuit or by executing code instructions.

According to an eleventh aspect, a computer-readable storage medium is provided. The computer-readable storage medium stores a computer program or instructions. When the computer program or the instructions is/are executed by a processor, the method according to the first aspect to the sixth aspect and any possible design is implemented.

According to a twelfth aspect, a computer program product storing instructions is provided. When the instructions are run by a processor, the method according to the first aspect to the sixth aspect and any possible design is implemented.

According to a thirteenth aspect, a chip system is provided. The chip system includes a processor, and may further include a memory, configured to implement the method according to the first aspect to the sixth aspect and any possible design. The chip system may include a chip, or may include a chip and another discrete device.

According to a fourteenth aspect, a communication system is provided. The system includes the apparatus (for example, a terminal device) according to the first aspect and the apparatus (for example, a network device) according to the second aspect.

According to a fifteenth aspect, a communication system is provided. The system includes the apparatus (for example, a terminal device) according to the third aspect and the apparatus (for example, a network device) according to the fourth aspect.

According to a sixteenth aspect, a communication system is provided. The system includes the apparatus (for example, a terminal device) according to the fifth aspect and the apparatus (for example, a network device) according to the sixth aspect.

For technical effect that can be achieved by the technical solutions of any one of the seventh aspect to the sixteenth aspect, refer to descriptions of technical effect that can be achieved by the technical solutions of the first aspect to the sixth aspect. Repeated parts are not described again.

### BRIEF DESCRIPTION OF DRAWINGS

FIG. 1 is a schematic flowchart of a four-step random access procedure according to an embodiment of this application;
FIG. 2 is a schematic flowchart of a two-step random access procedure according to an embodiment of this application;
FIG. 3 is a diagram of expanding a coverage area according to an embodiment of this application;
FIG. 4 is a diagram of an architecture of a communication system according to an embodiment of this application;
FIG. 5 is a diagram of a connection between a terminal device and a network device according to an embodiment of this application;
FIG. 6 is a schematic flowchart of a communication method according to an embodiment of this application;
FIG. 7 is a schematic flowchart of a communication method according to an embodiment of this application;
FIG. 8 is a schematic flowchart of a communication method according to an embodiment of this application;
FIG. 9 is a diagram of a structure of a communication apparatus according to an embodiment of this application; and
FIG. 10 is a diagram of a structure of a communication apparatus according to an embodiment of this application.

### DESCRIPTION OF EMBODIMENTS

To make objectives, technical solutions, and advantages of embodiments of this application clearer, the following further describes embodiments of this application in detail with reference to accompanying drawings.

The following describes some terms in embodiments of this application, to facilitate understanding of a person skilled in the art.
(1) A terminal device may be a device having a wireless transceiver function or a chip that can be disposed in any device, or may be referred to as user equipment (user equipment, UE), an access terminal, a subscriber unit, a subscriber station, a mobile station, a mobile console, a mobile station, a remote station, a remote terminal, a mobile device, a user terminal, a wireless communication device, a user agent, or a user apparatus. The terminal device in embodiments of this application may be a mobile phone (mobile phone), a tablet (Pad), a computer having the wireless transceiver function, an XR device (for example, a VR device, an AR device, or an MR device), a wireless terminal in industrial control (industrial control), a wireless terminal in self driving (self driving), a wireless terminal in video surveillance, a wearable terminal device, or the like. Alternatively, the terminal device may be eMBB UE, URLLC UE, an uncrewed aerial vehicle, another internet of things (internet of things, IoT) device, a positioning device, or the like.
   A network device may be an apparatus configured to implement a function of an access network device. The access network device may be a device that communicates with a wireless terminal device over an air interface in an access network by using one or more cells. For example, the access network device may be a next generation NodeB (next Generation node B, gNB) in an NR system, an evolved NodeB (evolutional node B, eNB) in a long term evolution (long term evolution, LTE) system, or the like. Alternatively, the network device may be an apparatus that can support the network device in implementing the function of the access network device, for example, a chip system. The apparatus may be mounted in the network device.
(2) Reduced capability (reduced capability, RedCap) terminal device (REDCAP UE)
   The REDCAP UE may be understood as a terminal device with a reduced capability compared with a legacy terminal device (legacy UE). A difference between the legacy UE and the REDCAP UE includes at least one of the following:
   1. Bandwidth capabilities are different. A maximum bandwidth supported by the legacy UE may be greater than a maximum bandwidth supported by the REDCAP UE. For example, the legacy UE may support a maximum of 100 MHz frequency domain resources simultaneously used on one carrier to communicate with the network device, and the REDCAP UE may support a maximum of 20 MHz, 10 MHz, or 5 MHz frequency domain resources on one carrier to communicate with the network device.
   2. Quantities of transceiver antennas are different. An antenna configuration of the legacy UE may be greater than an antenna configuration of the REDCAP UE. For example, a minimum antenna configuration supported by the legacy UE may be greater than a maximum antenna configuration supported by the REDCAP UE. For example, the minimum antenna configuration supported by the legacy UE may be 4T2R, to be specific, in the minimum antenna configuration, four receive antennas are used to receive downlink signals, and two transmit antennas are used to send uplink signals. However, a maximum antenna configuration supported by the REDCAP UE may be less than 4T2R. For example, the REDCAP UE supports only 2R1T, or may support 2R2T.
   3. Maximum uplink transmit power is different. Maximum uplink transmit power of the legacy UE may be greater than maximum uplink transmit power of the REDCAP UE. For example, the maximum uplink transmit power of the legacy UE may be 23 dBm or 26 dBm, and the maximum uplink transmit power of the REDCAP UE may be only one value from 4 dBm to 20 dBm.
   4. The legacy UE and the REDCAP UE correspond to different protocol versions. For example, an NR Rel-15 terminal device and an NR Rel-16 terminal device may be considered as the legacy UE, and the REDCAP UE may be considered as an NR Rel-17 terminal device.
   5. The legacy UE and the REDCAP UE support different carrier aggregation (carrier aggregation, CA) capabilities. For example, the legacy UE may support carrier aggregation, but the REDCAP UE does not support carrier aggregation. For another example, both the REDCAP UE and the legacy UE support carrier aggregation, but a maximum quantity of carrier aggregation simultaneously supported by the legacy UE is greater than a maximum quantity of carrier aggregation simultaneously supported by the REDCAP UE. For example, the legacy UE may simultaneously support aggregation of a maximum of five carriers or 32 carriers, while the REDCAP UE simultaneously supports aggregation of a maximum of two carriers.
   6. The legacy UE and the REDCAP UE have different frequency division duplex (frequency division duplex, FDD) capabilities. For example, the legacy UE may support full-duplex FDD, and the REDCAP UE may support only half-duplex FDD.
   7. The REDCAP UE and the legacy UE have different data processing time capabilities. For example, a minimum delay between receiving downlink data by the legacy UE and sending feedback for the downlink data by the legacy UE is less than a minimum delay between receiving downlink data by the REDCAP UE and sending the feedback for the downlink data by the REDCAP UE; and/or a minimum delay between sending uplink data by the legacy UE and receiving the feedback for the uplink data by the legacy UE is less than a minimum delay between sending uplink data by the REDCAP UE and receiving the feedback for the uplink data by the REDCAP UE.
   8. The legacy UE and the REDCAP UE have different processing capabilities.
   9. The legacy UE and the REDCAP UE correspond to different uplink and/or downlink peak transmission rates.
   10. The REDCAP UE supports a downlink bandwidth part (bandwidth part, BWP) that is configured by UE-specific radio resource control (radio resource control, RRC) (UE-specific RRC) and that includes a cell defining SSB (cell defining SSB, CD-SSB) or a non-cell defining SSB (non-cell defining SSB, NCD-SSB). The legacy UE supports only a downlink BWP that is configured by UE-specific RRC and that includes a CD-SSB.
   11. The REDCAP UE supports NCD-SSB-based measurement in the downlink BWP configured by RRC.
(3) Enhanced reduced capability (enhanced reduced capability, eRedCap) terminal device (EREDCAP UE)
   The EREDCAP UE may be understood as a terminal device whose capability is further reduced compared with the REDCAP UE. The EREDCAP UE inherits most configurations of the REDCAP UE, and further enhancement includes at least one of the following:
   1. Uplink and downlink peak rates are 10 Mbps. For UE in a feature group FG 48-1, a peak rate is v*Q*f=3.2. v is a quantity of multiple-input multiple-output (multiple-input multiple-output, MIMO) layers (layer), Q is a modulation order, and f is a scaling factor. For UE in a feature group FG 48-2, when a quantity of layers is 1, a peak rate is v*Q*f=0.8; or when a quantity of layers is 2, a peak rate is v*Q*f=0.75.
   2. For the UE in the FG 48-1, a maximum quantity of uplink or downlink unicast scheduling physical resource blocks (physical resource blocks, PRBs) supported by a single slot (slot) or a single hop (hop) is 25 PRBs at 15 kHz or 12 PRBs at 30 kHz.
   3. When a quantity of resource blocks (resource block, RB) scheduled for a physical downlink shared channel (physical downlink shared channel, PDSCH) of a random access response (random access response, RAR) or a PDSCH of a message B (MsgB) exceeds 25 PRBs at 15 kHz or 12 PRBs at 30 kHz, timing relaxation of 1/0.5 ms for RAR respectively corresponds to a 15/30 kHz subcarrier spacing (subcarrier spacing, SCS).
(4) A random access procedure includes a contention-based random access (contention-based random access, CBRA) process and a contention-free random access (contention-free random access, CFRA) process. The following describes the CBRA process.

The CBRA process may be completed on a four-step random access channel (random access channel, RACH) or a two-step RACH.

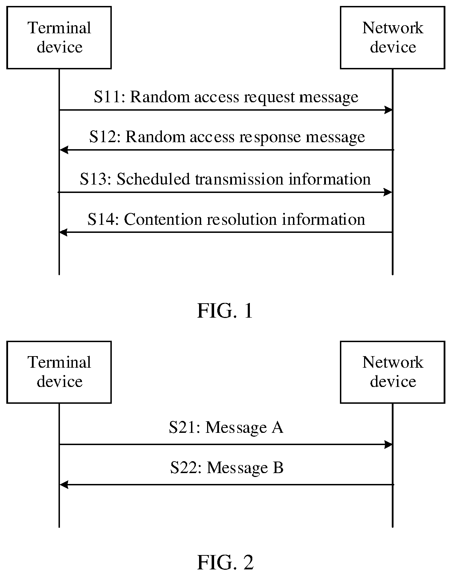

Refer to FIG. 1. The four-step RACH process includes the following steps.

S11: A terminal device sends a random access request message to a network device, and the network device receives the random access request message from the terminal device. The random access request message may also be referred to as a first message (Msg1), including a random access preamble (preamble).

S12: The network device sends an RAR message to the terminal device, and the terminal device receives the RAR message from the network device. The RAR message may also be referred to as a second message (Msg2).

S13: The terminal device sends scheduled transmission (scheduled transmission) information to the network device, and the network device receives the scheduled transmission information from the terminal device. A message carrying the scheduled transmission information is referred to as a third message (Msg3).

After receiving the RAR message, the terminal device performs message transmission based on scheduling of the RAR message. Specifically, the terminal device may send the Msg3 on a physical uplink shared channel (physical uplink shared channel, PUSCH) scheduled by using an RAR uplink grant (RAR UL grant) carried in a first RAR.

S14: The network device sends contention resolution (contention resolution) information to the terminal device, where a message carrying the contention resolution information is referred to as a fourth message (Msg4). The terminal device may obtain the contention resolution information by receiving the Msg4 from the network device.

The foregoing describes the four-step RACH. The following describes the two-step RACH. Refer to FIG. 2. The two-step RACH includes the following steps.

S21: A terminal device sends a message A (MsgA) to a network device, and the network device receives the MsgA from the terminal device.

The terminal device selects a MsgA resource from common MsgA resources broadcast by the network device, and sends the MsgA on the MsgA resource. The MsgA resource includes a resource (a time-frequency code) for sending a preamble and a corresponding PUSCH resource. The MsgA also includes two parts: the preamble and a PUSCH payload (payload).

It may be considered that the MsgA message includes the preamble and content included in the Msg3 in the four-step RACH.

S22: The network device sends a MsgB to the terminal device, and the terminal device receives the MsgB from the network device.

The MsgB may include contention resolution information, and may include content included in the RAR message in the four-step RACH.

The terms "system" and "network" may be used interchangeably in embodiments of this application. In embodiments of this application, "at least one" means one or more, and "a plurality of" means two or more. "And/or" describes an association relationship between associated objects, and indicates that three relationships may exist. For example, A and/or B may indicate the following cases: A exists alone, both A and B exist, and B exists alone, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

Unless otherwise stated on the contrary, ordinal terms such as "first" and "second" mentioned in embodiments of this application are used to distinguish between a plurality of objects, and are not intended to limit sizes, content, a sequence, a time sequence, priorities, importance, or the like of the plurality of objects. For example, a first message and a second message are merely intended to distinguish between different messages, but do not indicate that the two messages are different in sending sequences, content, priorities, or importance.

The foregoing describes some terms in embodiments of this application. The following describes technical features in embodiments of this application.

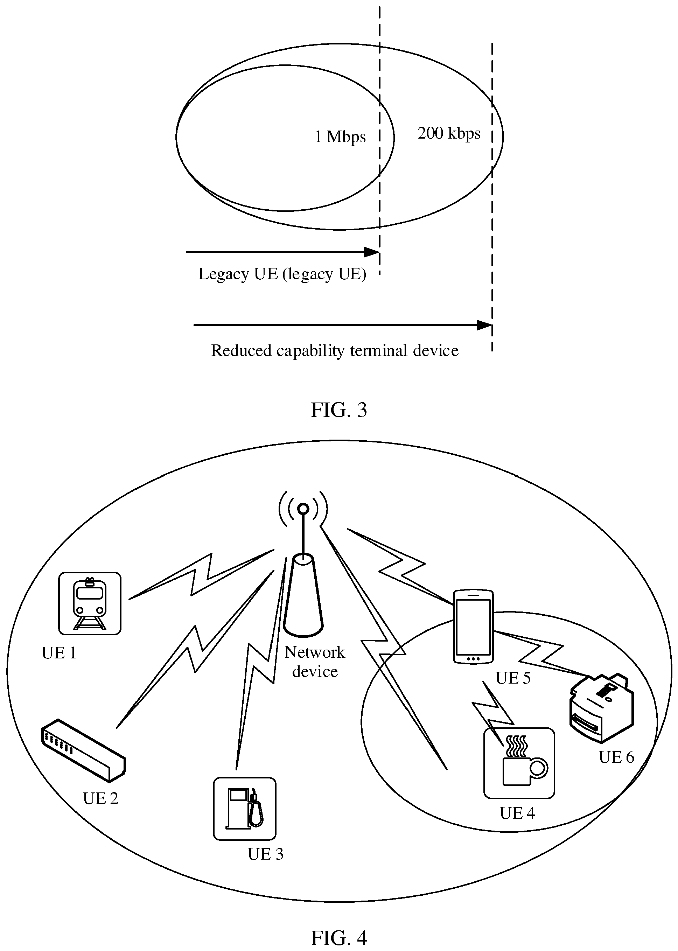

To further increase an application scope of a reduced capability terminal device (for example, REDCAP UE, EREDCAP UE, or another reduced capability terminal device that appears in the future) or use a low network construction density, a coverage area may be expanded by further reducing an edge rate of the terminal device. For example, the network device may separately configure different cell access parameters for the reduced capability terminal device and the legacy UE, so that different terminal devices have different coverage areas. For example, as shown in FIG. 3, it is assumed that a rate of the legacy UE is 1 Mbps, a rate of the reduced capability terminal device is 200 kbps, and a coverage area of the reduced capability terminal device is larger.

To improve a coverage area of the reduced capability terminal device, it is necessary to determine coverage-limited channels of the reduced capability terminal device. It can be learned from a coverage evaluation result that, in a scenario in which a carrier frequency is 4 GHz in an urban (Urban) area, three channels with maximum coverage losses of the reduced capability terminal device are sequentially Msg2>PUSCH>Msg4. Coverage enhancement of the Msg2 channel and the PUSCH channel has been supported in an existing protocol. The PUSCH channel can support a plurality of repetitions through TDRA configuration of the DCI, to implement coverage enhancement. The Msg2 channel may implement transport block scaling based on a TB scaling field, to improve coverage. However, currently, how to perform coverage enhancement is not defined in a protocol for another message, for example, the Msg4. Consequently, communication performance of the reduced capability terminal device is poor. The Msg4 is used as an example. Because losses of the Msg4 channel are large, the terminal device may fail to access the network device. Especially for the EREDCAP UE, because a capability is further reduced, losses of the Msg4 channel are greater, and a random access success probability is lower.

In view of this, embodiments of this application provide a communication method and apparatus, to perform coverage enhancement on a message, for example, the Msg4. The method and an apparatus are based on a same inventive concept. Because the method and the apparatus have a similar problem-resolving principle, for implementations of the apparatus and the method, refer to each other, and no repeated description is provided.

The communication method provided in this application may be applied to various communication systems, for example, internet of things (internet of things, IoT), narrow band internet of things (narrow band internet of things, NB-IoT), long term evolution (long term evolution, LTE), a 5th generation (5G) communication system, an LTE and 5G hybrid architecture, a 5G new radio (new radio, NR) system, and a 6G system or a new communication system emerging in future communication development. The 5G communication system in this application may include at least one of a non-standalone (non-standalone, NSA) 5G communication system and a standalone (standalone, SA) 5G communication system. The communication system may alternatively be a machine to machine (machine to machine, M2M) network or another network.

Communication between the network device and the terminal device may be performed over a licensed spectrum (licensed spectrum), or may be performed over an unlicensed spectrum (unlicensed spectrum), or may be performed over both a licensed spectrum and an unlicensed spectrum. The network device and the terminal device may communicate with each other by using a spectrum below 6G, may communicate with each other by using a spectrum above 6G, or may communicate with each other by using both the spectrum below 6G and the spectrum above 6G. A spectrum resource used between the network device and the terminal device is not limited in embodiments of this application.

FIG. 4 shows a communication system according to an embodiment of this application. The communication system includes one network device and six terminal devices, namely, UE 1 to UE 6. In the communication system, the UE 1 to the UE 6 may send uplink data to the network device, and the network device may receive the uplink data sent by the UE 1 to the UE 6. In addition, the UE 4 to the UE 6 may also form a communication subsystem. The network device may send downlink information to the UE 1, UE 2, UE 3, and UE 5, and the UE 5 may send the downlink information to the UE 4 and the UE 6 by using a device-to-device (device-to-device, D2D) technology. FIG. 4 is merely a diagram, and a type of a communication system, a quantity of devices included in the communication system, a type of a device included in the communication system, and the like are not specifically limited.

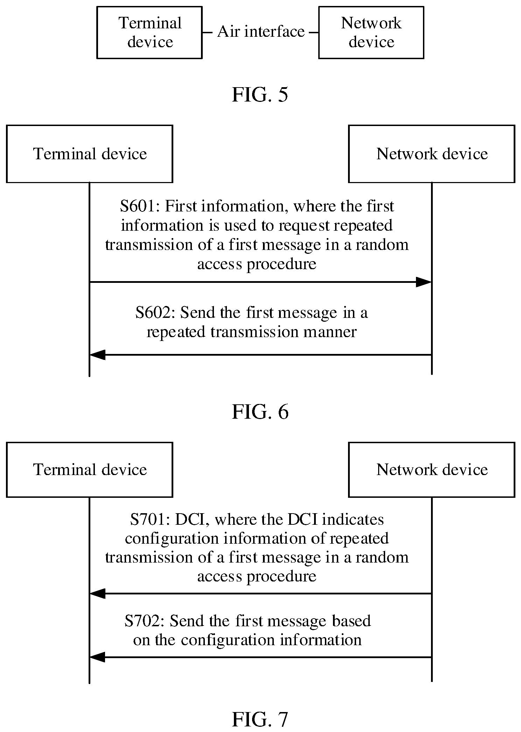

For example, the network device and the terminal device may be connected through an air interface. For example, a connection relationship between the network device and the terminal device may be shown in FIG. 5.

Embodiments of this application may be applied to a communication system of a reduced capability terminal device is reduced, or certainly may be applied to a communication system of both a reduced capability terminal device and legacy UE.

A network architecture and a service scenario described in embodiments of this application are intended to describe technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

The following describes technical solutions in embodiments of this application with reference to accompanying drawings in embodiments of this application. For ease of description, in the following, an example in which the method is performed by a network device and a terminal device is used.

FIG. 6 is a schematic flowchart of a communication method according to this application. The method includes the following steps.

S601: A terminal device sends first information. Correspondingly, a network device receives the first information.

The first information is used to request repeated transmission of a first message in a random access procedure, and the first information includes at least one of the following: a preamble or a logical channel identifier. The first message carries contention resolution information. The first message may be a Msg4 in a four-step random access procedure, or the first message is a MsgB in a two-step random access procedure. The following further relates to a second message in the random access procedure, and the second message is carried on a physical uplink shared channel. The second message may be a Msg3 in the four-step random access procedure, or the first message is a MsgA in the two-step random access procedure.

A specific manner in which the first information is used to request repeated transmission of the Msg4 is described in detail below.

S602: The network device sends the first message in a repeated transmission manner. Correspondingly, the terminal device receives the first message.

In this application, the preamble or the logical channel identifier is used to request the network device to repeatedly transmit the Msg4, so that coverage enhancement of the Msg4 can be implemented, a success rate of random access can be improved, a communication delay can be reduced, and a coverage area of the terminal device can be further improved.

For ease of understanding of the solution, the following uses an example in which the first message is the Msg4 and the second message is the Msg3 for description.

The following describes three examples in which the first information is used to request repeated transmission of the Msg4.

Example 1: Repeated transmission of the Msg4 may be requested by using a specific preamble. For example, the first information includes a first preamble, and the first preamble is used to request repeated transmission of the Msg4. Specifically, it is predefined or agreed in advance that the first preamble indicates to request repeated transmission of the first message (for example, the Msg4). When receiving the first preamble, the network device may determine that the terminal device requests to send the Msg4 in a repeated transmission manner, and no additional indication information needs to be introduced.

Based on the foregoing example, there may be two implementations.

In an implementation, repeated transmission of the Msg4 and repeated transmission of the Msg3 are separately requested by using different preambles. For example, a preamble set that includes the first preamble may further include a second preamble, and the second preamble is used to request repeated transmission of the Msg3.

Optionally, there may be a plurality of first preambles, that is, there may be a plurality of specific preambles used to request repeated transmission of the Msg4. If the terminal device sends any one of the preambles, the network device may schedule repeated transmission of the Msg4. The Msg4 is requested to be sent in a repeated transmission manner by using the plurality of specific preamble, so that different terminal devices can select different preambles for random access, thereby reducing a collision probability of the terminal devices.

There may also be a plurality of second preambles, that is, there may be a plurality of specific preambles used to request repeated transmission of the Msg3. If the terminal device sends any one of the preambles, the network device may schedule repeated transmission of the Msg3.

For example, it is assumed that the preamble set includes 64 preambles, K1 preambles in the preamble set are used to request repeated transmission of the Msg3, and K2 preambles are used to request repeated transmission of the Msg4. K1 preamble sequences and K2 preambles are two subsets of the preamble set. K1 is an integer greater than 0 and less than 64, and K2 is an integer greater than 0 and less than 64. If the network device detects any one of the K1 preambles, the network device may schedule repeated transmission of the Msg3. If the network device detects any one of the K2 preambles, the network device may schedule repeated transmission of the Msg4.

In an implementation, repeated transmission of the Msg4 and repeated transmission of the Msg3 are requested by using a same preamble. For example, the first preamble is used to request repeated transmission of the Msg3 and the Msg4.

Optionally, there may be a plurality of first preambles, that is, there may be a plurality of specific preambles used to request repeated transmission of the Msg3 and the Msg4. If the terminal device sends any one of the preambles, the network device may schedule repeated transmission of the Msg3 and the Msg4.

For example, it is assumed that the preamble set includes 64 preambles, and K preambles in the preamble set are used to request repeated transmission of the Msg3 and the Msg4. The K preamble sequences are a subset of the preamble set. K is an integer greater than 0 and less than 64. If the network device detects any one of the K preambles, the network device may schedule repeated transmission of the Msg3 and the Msg4.

Example 2: Repeated transmission of the Msg4 may be requested in a specific random access resource. For example, the terminal device may include the first information in the specific random access resource to request repeated transmission of the Msg4. For example, the first information is carried in a first random access resource, and the first random access resource is used to request repeated transmission of the Msg4. Specifically, it is predefined or agreed in advance that the first random access resource indicates to request repeated transmission of the first message (for example, the Msg4). When detecting the preamble in the first random access resource, the network device may determine that the terminal device requests to send the Msg4 in a repeated transmission manner, and no additional indication information needs to be introduced.

Optionally, there may be a plurality of first random access resources, that is, a plurality of specific random access resources may be used to request repeated transmission of the Msg4. If the network device detects the preamble in any one of the random access resources, the network device may schedule repeated transmission of the Msg4. The Msg4 is requested to be sent in a repeated transmission manner in the plurality of specific random access resources, so that different terminal devices can select different random access resources for random access, thereby reducing a collision probability of the terminal devices.

For example, a random access resource pool may be divided, where L random access resources are used to request repeated transmission of the Msg4, and L is an integer greater than 0. If the network device detects the preamble in any one of the L random access resources, the network device may schedule repeated transmission of the Msg4.

Example 3: Repeated transmission of the Msg4 may be requested by using a specific logical channel identifier (logical channel identifier, LCID). For example, the first information includes a first LCID, and the first LCID is used to request repeated transmission of the Msg4. Specifically, it is predefined or agreed in advance that the first LCID indicates to request repeated transmission of the first message (for example, the Msg4). When receiving the first LCID, the network device may determine that the terminal device requests to send the Msg4 in a repeated transmission manner, and no additional indication information needs to be introduced.

Optionally, there may be a plurality of first LCIDs, that is, there may be a plurality of specific LCID values used to request repeated transmission of the Msg4. The Msg4 is requested to be sent in a repeated transmission manner by using a plurality of specific LCID, so that different types of terminal devices can use corresponding LCIDs. This helps improve communication performance.

For example, a value of the first LCID is 39, 40, 41, 42, or 47. In a possible example, the plurality of specific LCID values may include one or more of 39, 40, 41, 42, or 47. In other words, an optional value of the first LCID may include one or more of 39, 40, 41, 42, or 47.

For example, when a value of the LCID is 35 or 36, it indicates that a UE type of the terminal device is REDCAP UE. When a value of the LCID is 39 or 40, it indicates that a UE type of the terminal device is REDCAP UE, and the Msg4 is requested to be repeatedly transmitted. If the network device detects the value of the LCID is 35 or 36, it may be determined that the UE type of the terminal device is REDCAP UE, and the Msg4 does not need to be scheduled to be repeatedly transmitted. If the network device detects the value of the LCID is 39 or 40, it may be determined that the UE type of the terminal device is REDCAP UE, and the Msg4 needs to be scheduled to be repeatedly transmitted.

When a value of the LCID is 37 or 38, it indicates that a UE type of the terminal device is eREDCAP UE. When a value of the LCID is 41 or 42, it indicates that the UE type of the terminal device is eREDCAP UE and the Msg4 is requested to be repeatedly transmitted. If the network device detects the value of the LCID is 37 or 38, it may be determined that the UE type of the terminal device is eREDCAP UE, and the Msg4 does not need to be scheduled to be repeatedly transmitted. If the network device detects the value of the LCID is 41 or 42, it may be determined that the UE type of the terminal device is eREDCAP UE, and the Msg4 needs to be scheduled to be repeatedly transmitted. Table 1 is as follows.

**Table 1**

| LCID value | Indication content |
|---|---|
| 35 | For REDCAP UE, a common control channel (common control channel, CCCH) included in the Msg3 is 48 bits (CCCH of size 48 bits for a RedCap UE) |
| 36 | For REDCAP UE, a CCCH included in the Msg3 is 64 bits (CCCH of size 64 bits for a RedCap UE) |
| 37 | For eREDCAP UE, a CCCH included in the Msg3 is 48 bits (CCCH of size 48 bits for a eRedCap UE) |
| 38 | For eREDCAP UE, a CCCH included in the Msg3 is 64 bits (CCCH of size 64 bits for a eRedCap UE) |
| 39 | CCCH of size 48 bitsfor a RedCap UE, repetition (repetition) |
| 40 | CCCH of size 64 bitsfor a RedCap UE, repetition |
| 41 | CCCH of size 48 bitsfor a eRedCap UE, repetition |
| 42 | CCCH of size 64 bitsfor a eRedCap UE, repetition |

For example, the value of the first LCID may alternatively be 35, 36, 37, or 38. In a possible example, the plurality of specific LCID values may include one or more of 35, 36, 37, or 38. In other words, an optional value of the first LCID may include one or more of 35, 36, 37, or 38.

For example, when a value of the LCID is 35 or 36, it indicates that a UE type of the terminal device is the REDCAP UE, and the Msg4 is requested to be repeatedly transmitted. If the network device detects the value of the LCID is 35 or 36, it may be determined that the UE type of the terminal device is the REDCAP UE, and the Msg4 needs to be scheduled to be repeatedly transmitted.

When a value of the LCID is 37 or 38, it indicates that a UE type of the terminal device is the eREDCAP UE, and the Msg4 is requested to be repeatedly transmitted. If the network device detects the value of the LCID is 37 or 38, it may be determined that the UE type of the terminal device is the eREDCAP UE, and the Msg4 needs to be scheduled to be repeatedly transmitted. Table 2 is as follows.

**Table 2**

| LCID value | Indication content |
|---|---|
| 35 | CCCH of size 48 bits for a RedCap UE, repetition |
| 36 | CCCH of size 64 bits for a RedCap UE, repetition |
| 37 | CCCH of size 48 bits for a eRedCap UE, repetition |
| 38 | CCCH of size 64 bits for a eRedCap UE, repetition |

It should be noted that the foregoing three examples are described by using only an example in which a preamble, a random access resource carrying the preamble, and an LCID separately request repeated transmission of the Msg4. During specific implementation, any two of the preamble, the random access resource carrying the preamble, and the LCID may be jointly requested. For example, the preamble and the random access resource carrying the preamble are jointly used to request repeated transmission of the Msg4. For example, if the network device detects a specific preamble in a specific random access resource, the Msg4 may be scheduled to be repeatedly transmitted. Alternatively, if the network device detects a preamble in a specific random access resource, and the LCID is a specific value, the Msg4 may be scheduled to be repeatedly transmitted. Alternatively, if the network device detects a specific preamble, and the LCID is a specific value, the Msg4 may be scheduled to be repeatedly transmitted.

Alternatively, the preamble, the random access resource carrying the preamble, and the LCID may be jointly requested. If the network device detects a specific preamble in a specific random access resource, and the LCID is a specific value, the Msg4 may be scheduled to be repeatedly transmitted.

In the foregoing manner, at least two specific resources are used to jointly request repeated transmission of the Msg4. Compared with a manner of requesting to repeatedly transmit the Msg4 by using a signaling message, this manner can reduce signaling overheads.

The foregoing describes a manner in which the terminal device requests the network device to repeatedly transmit the Msg4. Optionally, before requesting to repeatedly transmit the Msg4, the terminal device may determine whether to repeatedly transmit the Msg4.

In a possible implementation, when reference signal received power (reference signal received power, RSRP) of a downlink reference signal is less than an RSRP threshold, the terminal device initiates a Msg4 repeated transmission request. The downlink reference signal may be a synchronization signal/physical broadcast channel block (ss/pbch block, SSB) having a measurement function.

Optionally, in this application, repeatedly transmitting the Msg4 on the primary component carrier and the secondary component carrier may be supported. In this implementation, the primary component carrier and the secondary component carrier may correspond to different RSRP thresholds. When the RSRP of the downlink reference signal on the primary component carrier is less than an RSRP threshold corresponding to the primary component carrier, the terminal device may request repeated transmission of the Msg4 on the primary component carrier; or when the RSRP of the downlink reference signal on the secondary component carrier is less than an RSRP threshold corresponding to the secondary component carrier, the terminal device may request repeated transmission of the Msg4 on the secondary component carrier. The RSRP threshold corresponding to the primary component carrier may be the same as or different from the RSRP threshold corresponding to the secondary component carrier. This is not specifically limited herein.

In this application, before requesting to repeatedly transmit the Msg4, the terminal device may further determine to obtain a priority of repeated transmission of the Msg4. For example, before S601, the network device may send second information to the terminal device, where the second information indicates a priority of repeated transmission of the Msg4. For example, the second information may be included in a system information block 1 (system information block 1, SIB1).

In a possible implementation, the network device may configure a plurality of groups of random access resources for the terminal device. The plurality of groups of random access resources may correspond to a plurality of features. For example, a random access resource A corresponds to the REDCAP UE, that is, the REDCAP UE may perform random access in the random access resource A; a random access resource B corresponds to a network slice, that is, a terminal device that supports the network slice may perform random access in the random access resource B; a random access resource C corresponds to small packet transmission, and a terminal device that needs to perform small packet transmission may perform random access in the random access resource C; a random access resource D corresponds to Msg3 coverage enhancement, and a terminal device that requires Msg3 coverage enhancement may perform random access in the random access resource D; and a random access resource E corresponds to Msg4 coverage enhancement, and a terminal device that requires Msg4 coverage enhancement may perform random access in the random access resource E. When the plurality of groups of random access resources are configured for the terminal device, a configured random access resource set and a feature that is applicable to a current random access procedure are used as an input. Specifically, a random access resource corresponding to a feature with a highest priority may be applied to the current random access procedure.

It should be noted that the method in FIG. 6 is described by using an example in which the first information is used to request repeated transmission of the Msg4. In specific implementation, the Msg4 may alternatively be requested not to be repeatedly transmitted. Specifically, non-repeated transmission of the Msg4 may be requested in a manner similar to that in Example 1 to Example 3. For example, non-repeated transmission of the Msg4 is requested by using a specific preamble, non-repeated transmission of the Msg4 is requested in a specific random access resource, or non-repeated transmission of the Msg4 is requested by using a specific LCID. For details, refer to the foregoing related descriptions. Details are not described herein again.

It may be understood that non-repeated transmission of the Msg4 and repeated transmission of the Msg4 may be requested based on different information. A specific preamble request is used as an example. A preamble used to request non-repeated transmission of the Msg4 is different from a preamble used to request repeated transmission of the Msg4. A resource used to request repeated transmission of the Msg4 is isolated from a resource used to request non-repeated transmission of the Msg4, so that request accuracy can be improved, and communication performance can be improved.

The specific random access resource request is used as an example. A random access resource used to request non-repeated transmission of the Msg4 is different from a random access resource used to request repeated transmission of the Msg4. The specific LCID request is used as an example. An LCID used to request non-repeated transmission of the Msg4 is different from an LCID used to request repeated transmission of the Msg4.

Alternatively, repeated transmission of the Msg4 may be requested by using a specific preamble, and non-repeated transmission of the Msg4 may be requested in a specific random access resource. For example, it is predefined that a preamble A is used to request repeated transmission of the Msg3 and the Msg4, and the random access resource A is used to request non-repeated transmission of the Msg4. If the network device detects the preamble A in the random access resource A, the network device may schedule repeated transmission of the Msg3, and does not need to schedule repeated transmission of the Msg4.

Similarly, repeated transmission of the Msg4 may be requested by using a specific preamble, and non-repeated transmission of the Msg4 may be requested by using a specific LCID. Alternatively, repeated transmission of the Msg4 may be requested in a specific random access resource, and non-repeated transmission of the Msg4 may be requested by using a specific LCID. Alternatively, repeated transmission of the Msg4 may be requested in a specific random access resource, and non-repeated transmission of the Msg4 may be requested by using a specific preamble. Alternatively, repeated transmission of the Msg4 may be requested by using a specific LCID, and non-repeated transmission of the Msg4 may be requested by using a specific preamble. Alternatively, repeated transmission of the Msg4 may be requested by using a specific LCID, and non-repeated transmission of the Msg4 may be requested in a specific random access resource. Another example is not described.

In this application, the preamble or the logical channel identifier is used to request the network device to repeatedly transmit the Msg4, so that coverage enhancement of the Msg4 can be implemented, a success rate of random access can be improved, a communication delay can be reduced, and a coverage area of the terminal device can be further improved. In addition, repeated transmission of the Msg4 is requested by using the preamble, the random access resource carrying the preamble, the logical channel identifier, and the like, so that signaling overheads can be reduced.

The foregoing describes a manner in which the terminal device requests the network device to repeatedly transmit the Msg4. Before repeatedly sending the Msg4, the network device may configure repeated transmission of the Msg4 for the terminal device. The following describes two manners in which the network device configures repeated transmission of the Msg4.

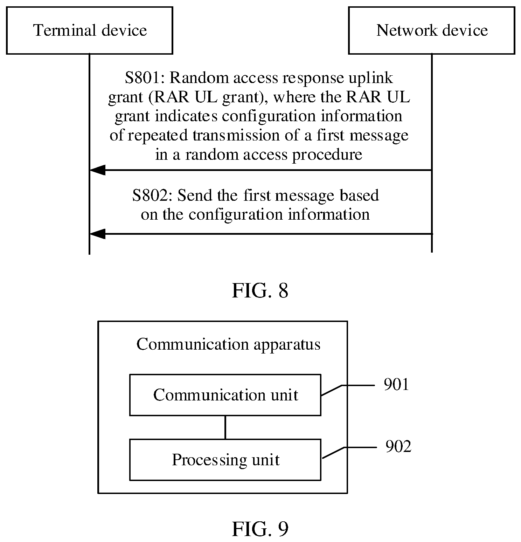

It should be noted that the manner of requesting to repeatedly transmit the Msg4 and any manner of configuring repeated transmission of the Msg4 may be separately implemented as one solution, or may be combined and implemented as one solution. Specifically, if the method in FIG. 6 and the method in FIG. 7 are combined as an implementation solution, S701 may be performed after S601, and S602 may be performed after S701. When S602 is performed, the first message may be sent based on configuration information in S701 (that is, S702). If the method in FIG. 6 and the method in FIG. 8 are combined as an implementation solution, S801 may be performed after S601, and S602 may be performed after S801. When S602 is performed, the first message may be sent based on the configuration information in S801 (that is, S802).

Manner 1 of configuring repeated transmission of the Msg4:

FIG. 7 is a schematic flowchart of a communication method according to this application. The method includes the following steps.

S701: A network device sends DCI. Correspondingly, a terminal device receives the DCI.

The DCI is scrambled by using a temporary cell-radio network temporary identifier (temporary cell-radio network temporary identifier, TC-RNTI), the DCI indicates configuration information of repeated transmission of a first message in a random access procedure, and the first message carries contention resolution information. Optionally, a format of the DCI may be a format 1-0.

The first message may be a Msg4 in a four-step random access procedure, or may be referred to as a message scheduled based on the DCI format 1-0 scrambled by using the TC-RNTI, or the first message is a MsgB in a two-step random access procedure.

A specific manner in which the DCI indicates the configuration information of repeated transmission of the Msg4 is described in detail below.

S702: The network device sends the first message based on the configuration information. Correspondingly, the terminal device receives the first message based on the configuration information.

In this application, repeated transmission of the Msg4 is configured based on the DCI scrambled by using the TC-RNTI, so that the terminal device can obtain a related configuration of repeated transmission of the Msg4 before transmitting the Msg4. This helps improve transmission performance of the Msg4, further improve a success rate of a random access procedure, and reduce a communication delay.

For ease of understanding of the solution, the following uses an example in which the first message is the Msg4 for description.

The following describes four examples in which the DCI indicates the configuration information of repeated transmission of the Msg4.

Example A1: A modulation and coding scheme (modulation and coding scheme, MCS) field in the DCI indicates a quantity of repeated transmissions of the Msg4.

For example, most significant 2 bits (most significant bit, MSB) of the MCS field may indicate the repetition quantity of the Msg4.

For example, as shown in Table 3, when a value of 2 bits (for example, may be most significant 2 bits) of the MCS field is 00, it may indicate that the repetition quantity K is 1, that is, no repetition is performed; when a value of 2 bits of the MCS field is 01, it may indicate that the repetition quantity K is 2; when the value of the 2 bits of the MCS field is 10, it may indicate that the repetition quantity K is 3; or when the value of the 2 bits of the MCS field is 11, it may indicate that the repetition quantity K is 4.

**Table 3**

| 2 bits of the MCS | Repetition quantity |
|---|---|
| 00 | 1 |
| 01 | 2 |
| 10 | 3 |
| 11 | 4 |

It should be understood that Table 3 is merely an example for description. The repetition quantity indicated by the MCS is not limited in this application, and a correspondence between a value of the MCS field and the repetition quantity is not limited either.

Example A2: A downlink assignment index field in the DCI indicates a quantity of repeated transmissions of the Msg4.

For example, 2-bit information in the downlink assignment index field may indicate the repetition quantity of the Msg4.

For example, as shown in Table 4, when a value of 2 bits of the downlink assignment index field is 00, it may indicate that the repetition quantity K is 1, that is, no repetition is performed; when a value of 2 bits of the downlink assignment index field is 01, it may indicate that the repetition quantity K is 2; when a value of 2 bits of the downlink assignment index field is 10, it may indicate that the repetition quantity K is 3; or when a value of 2 bits of the downlink assignment index field is 11, it may indicate that the repetition quantity K is 4.

**Table 4**

| 2 bits of the downlink assignment index field | Repetition quantity |
|---|---|
| 00 | 1 |
| 01 | 2 |
| 10 | 3 |
| 11 | 4 |

It should be understood that Table 4 is merely an example for description. The repetition quantity indicated by the downlink assignment index field is not limited in this application, and a correspondence between a value of the downlink assignment index field and the repetition quantity is not limited either.

Example A3: The downlink assignment index field in the DCI indicates repeated transmission or non-repeated transmission of the Msg4, and the MCS field in the DCI indicates a quantity of repeated transmissions of the Msg4 when the downlink assignment index field indicates repeated transmission of the Msg4.

For example, 1 bit in the downlink assignment index field may indicate whether the Msg4 is repeatedly transmitted. When the downlink assignment index field indicates repeated transmission of the Msg4, 2 bits (for example, 2 bits of an MSB) in the MCS field indicate the quantity of repeated transmissions of the Msg4.

For example, when a value of 1 bit in the downlink assignment index field is 0, it indicates non-repeated transmission of the Msg4; or when a value of one bit in the downlink assignment index field is 1, it indicates repeated transmission of the Msg4. When the downlink assignment index field indicates repeated transmission of the Msg4, for a case in which the MCS field indicates a quantity of repeated transmissions of the Msg4, refer to related descriptions of Example A1. Details are not described herein again.

Example A4: The MCS field in the DCI indicates repeated transmission or non-repeated transmission of the Msg4, and the downlink assignment index field in the DCI indicates a quantity of repeated transmissions of the Msg4 when the MCS field indicates repeated transmission of the Msg4.

For example, 1 bit of the MSB in the MCS field may indicate whether the Msg4 is repeatedly transmitted. When 1 bit of the MSB in the MCS field indicates repeated transmission of the Msg4, 2 bits in the downlink assignment index field indicate the quantity of repeated transmissions of the Msg4.

For example, when a value of 1 bit of the MSB in the MCS field is 0, it indicates non-repeated transmission of the Msg4; or when a value of 1 bit of the MSB in the MCS field is 1, it indicates repeated transmission of the Msg4. When 1 bit of the MSB in the MCS field indicates repeated transmission of the Msg4, for a case in which the downlink assignment index field indicates a quantity of repeated transmissions of the Msg4, refer to related descriptions of Example A2. Details are not described herein again.

In this application, before configuring repeated transmission of the Msg4, the terminal device may further determine to obtain a priority of repeated transmission of the Msg4. For example, before S701, the network device may send second information to the terminal device, where the second information indicates a priority of repeated transmission of the Msg4. For example, the second information may be included in a SIB 1. For a specific implementation, refer to related descriptions in the method in FIG. 6. Details are not described herein again.

In this application, repeated transmission of the Msg4 is configured based on the DCI scrambled by using the TC-RNTI, so that the terminal device can obtain a related configuration of repeated transmission of the Msg4 before transmitting the Msg4. This helps improve transmission performance of the Msg4, further improve a success rate of a random access procedure, and reduce a communication delay. In addition, repeated transmission of the Msg4 is configured by multiplexing a field in the DCI, so that signaling overheads can be reduced.

Manner 2 of configuring repeated transmission of the Msg4: FIG. 8 is a schematic flowchart of a communication method according to this application. The method includes the following steps.

S801: A network device sends a random access response uplink grant (RAR UL grant). Correspondingly, a terminal device receives the RAR UL grant.

The RAR UL grant indicates configuration information of repeated transmission of a first message in a random access procedure, and the first message carries contention resolution information. The first message may be a Msg4 in a four-step random access procedure, or the first message is a MsgB in a two-step random access procedure.

A specific manner in which the RAR UL grant indicates the configuration information of repeated transmission of the Msg4 is described in detail below.

S802: The network device sends the first message based on the configuration information. Correspondingly, the terminal device receives the first message based on the configuration information.

In this application, repeated transmission of the Msg4 is configured by using the RAR UL grant, so that the terminal device can obtain a related configuration of repeated transmission of the Msg4 before transmitting the Msg4. This helps improve transmission performance of the Msg4, further improve a success rate of a random access procedure, and reduce a communication delay.

For ease of understanding of the solution, the following uses an example in which the first message is the Msg4 for description.

The following describes two examples in which the RAR UL grant indicates the configuration information of repeated transmission of the Msg4.

Example B1: A time domain resource assignment (time domain resource allocation, TDRA) field in the DCI indicates configuration information of repeated transmission of a Msg.

For example, a repetition quantity may be indicated based on a status of the TDRA field. For example, N statuses of the time domain resource assignment field one-to-one correspond to N repeated transmissions, and N is an integer greater than 0.

For example, four of the 16 statuses indicated by the 4 bits of the TDRA field may indicate that the quantity of repeated transmissions of the Msg4 is one to four. For example, four rows in a table 6.1.2.1.1-2 of the protocol 3GPP TS 38.214 V17.4.0 (2022-12), that is, a default PUSCH TDRA indication table used for a normal cyclic prefix, may be selected as an indication status of a quantity of repeated transmissions. For example, the first four rows in the table 6.1.2.1.1-2 of the protocol 3GPP TS 38.214 V17.4.0 (2022-12) may be selected as an indication status of the quantity of repeated transmissions, as shown in Table 5. Because a processing delay corresponding to the first four rows may exceed a scheduling delay, these scheduling configuration parameters are actually unavailable, and may indicate a repetition quantity of the Msg4.

**Table 5**

| Row index (Row index) | PUSCH mapping type (mapping type) | K2 | S | L | Repetition quantity |
|---|---|---|---|---|---|
| 1 | Type (Type) A | j | 0 | 14 | 1 |
| 2 | Type A | j | 0 | 12 | 2 |
| 3 | Type A | j | 0 | 10 | 3 |
| 4 | Type B | j | 2 | 10 | 4 |
| 5 | Type B | j | 4 | 10 | |
| 6 | Type B | j | 4 | 8 | |
| 7 | Type B | j | 4 | 6 | |
| 8 | Type A | j+1 | 0 | 14 | |
| 9 | Type A | j+1 | 0 | 12 | |
| 10 | Type A | j+1 | 0 | 10 | |
| 11 | Type A | j+2 | 0 | 14 | |
| 12 | Type A | j+2 | 0 | 12 | |
| 13 | Type A | j+2 | 0 | 10 | |
| 14 | Type B | j | 8 | 6 | |
| 15 | Type A | j+3 | 0 | 14 | |
| 16 | Type A | j+3 | 0 | 10 | |

K2 is a quantity of slots between an interval, S is a start symbol, and L is a symbol length.

It should be understood that Table 5 is merely an example for description. A row index indicating a quantity of repeated transmissions is not limited, or an indicated repetition quantity and a correspondence between a row index and the repetition quantity may not be limited in this application.

Example B2: A frequency domain resource assignment field and a frequency hopping field in the RAR UL grant indicate the configuration information of repeated transmission of the first message.

For example, P bits indicate a quantity of repeated transmissions of the first message, the P bits include at least one bit in the frequency domain resource assignment field and at least one bit in the frequency hopping field, and P is an integer greater than 1.

For example, one bit is selected from 14 bits of an FDRA field of the RAR UL grant, and the one bit and one bit that is of the frequency hopping field and that indicates whether frequency hopping is performed jointly indicates the repetition quantity of the Msg4. The FDRA field has 14 bits in total. When the UE is REDCAP UE or EREDCAP UE, a maximum of 13 bits need to indicate a frequency domain resource configuration of 106 resource blocks (resource block, RB). Therefore, there is one reserved bit. In this implementation, the repetition quantity of the Msg4 may be jointly indicated by using one reserved bit in the FDRA field and one bit in the field indicating whether frequency hopping is performed.

In the foregoing manner, a field indicating whether frequency hopping is performed indicates the repetition quantity of the Msg4. In this case, the information indicating whether frequency hopping is performed may be indicated in another manner. For example, the information indicating whether frequency hopping is performed may be indicated based on a frequency hopping offset indication field. For example, when a size of a bandwidth part (bandwidth part, BWP) is greater than or equal to 50, the frequency hopping offset indication field includes 2 bits. In this application, frequency hopping and a frequency hopping offset may be indicated based on value states 00, 01, and 10 of the frequency hopping offset indication field, a value state 11 indicates that no frequency hopping is performed.

In this application, before configuring repeated transmission of the Msg4, the terminal device may further determine to obtain a priority of repeated transmission of the Msg4. For example, before S701, the network device may send second information to the terminal device, where the second information indicates a priority of repeated transmission of the Msg4. For example, the second information may be included in a SIB 1. For a specific implementation, refer to related descriptions in the method in FIG. 6. Details are not described herein again.

In this application, repeated transmission of the Msg4 is configured by using the RAR UL grant, so that the terminal device can obtain a related configuration of repeated transmission of the Msg4 before transmitting the Msg4. This helps improve transmission performance of the Msg4, further improve a success rate of a random access procedure, and reduce a communication delay. In addition, repeated transmission of the Msg4 is configured by multiplexing a field in the RAR UL grant, so that signaling overheads can be reduced.

Based on a same inventive concept as the method embodiments, an embodiment of this application provides a communication apparatus. A structure of the communication apparatus may be shown in FIG. 9, and the communication apparatus includes a communication unit 901 and a processing unit 902.

In an implementation, the communication apparatus may be specifically configured to implement the method performed by the terminal device in the embodiment in FIG. 6. The apparatus may be the terminal device, or may be a chip or a chip set in the terminal device, or a part of the chip that is configured to perform a related method function. The processing unit 902 is configured to send first information via the communication unit 901, where the first information is used to request a network device to send a first message in a random access procedure in a repeated transmission manner, the first message carries contention resolution information, and the first information includes at least one of the following: a preamble or a logical channel identifier; and receive the first message via the communication unit 901.

For example, the first information includes a first preamble, and the first preamble is used to request to send the first message in a repeated transmission manner; or the first information is carried in a first random access resource, and the first random access resource is used to request to send the first message in a repeated transmission manner; or the first information includes a first logical channel identifier, and the first logical channel identifier is used to request to send the first message in a repeated transmission manner.

For example, the first preamble belongs to a preamble set, the preamble set may further include a second preamble, the second preamble indicates repeated transmission of a second message in a random access procedure, and the second message is carried on a physical uplink shared channel.

For example, the first preamble is further used to request to send a second message in a random access procedure in a repeated transmission manner, and the second message is carried on a physical uplink shared channel.

For example, a value of the first logical channel identifier is 39, 40, 41, 42, or 47.

Optionally, the processing unit 902 is further configured to receive second information via the communication unit 901, where the second information indicates a priority of repeated transmission of the first message.

In an implementation, the communication apparatus may be specifically configured to implement the method performed by the network device in the embodiment in FIG. 6. The apparatus may be the network device, may be a chip or a chip set in the network device, or a part of the chip that is configured to perform a related method function. The processing unit 902 is configured to: receive first information via the communication unit 901, where the first information is used to request a network device to send a first message in a random access procedure through repeated transmission, the first message carries contention resolution information, and the first information includes at least one of the following: a preamble or a logical channel identifier; and send the first message in a repeated transmission manner via the communication unit 901.

For example, the first information includes a first preamble, and the first preamble is used to request to send the first message in a repeated transmission manner; or the first information is carried in a first random access resource, and the first random access resource is used to request to send the first message in a repeated transmission manner; or the first information includes a first logical channel identifier, and the first logical channel identifier is used to request to send the first message in a repeated transmission manner.

For example, the first preamble belongs to a preamble set, the preamble set may further include a second preamble, the second preamble indicates repeated transmission of a second message in a random access procedure, and the second message is carried on a physical uplink shared channel.

For example, the first preamble is further used to request to send a second message in a random access procedure in a repeated transmission manner, and the second message is carried on a physical uplink shared channel.

For example, a value of the first logical channel identifier is 39, 40, 41, 42, or 47.

Optionally, the processing unit 902 is further configured to send second information via the communication unit 901, where the second information indicates a priority of repeated transmission of the first message.

In an implementation, the communication apparatus may be specifically configured to implement the method performed by the terminal device in the embodiment in FIG. 7. The apparatus may be the terminal device, or may be a chip or a chip set in the terminal device, or a part of the chip that is configured to perform a related method function. The processing unit 902 is configured to: receive DCI via the communication unit 901, where the DCI is scrambled by using a TC-RNTI, the DCI indicates configuration information of repeated transmission of a first message in a random access procedure, and the first message carries contention resolution information; and receive the first message based on the configuration information via the communication unit 901.

For example, an MCS field or a downlink assignment index field in the DCI indicates a quantity of repeated transmissions of the first message; or a downlink assignment index field in the DCI indicates repeated transmission or non-repeated transmission of the first message, and an MCS field in the DCI indicates a quantity of repeated transmissions of the first message when the downlink assignment index field indicates repeated transmission of the first message; or an MCS field in the DCI indicates repeated transmission or non-repeated transmission of the first message, and a downlink assignment index field in the DCI indicates a quantity of repeated transmissions of the first message when the MCS field indicates repeated transmission of the first message.

Optionally, the processing unit 902 is further configured to receive second information, where the second information indicates a priority of repeated transmission of the first message.

In an implementation, the communication apparatus may be specifically configured to implement the method performed by the network device in the embodiment in FIG. 7. The apparatus may be the network device, may be a chip or a chip set in the network device, or a part of the chip that is configured to perform a related method function. The processing unit 902 is configured to: send DCI via the communication unit 901, where the DCI is scrambled by using a TC-RNTI, the DCI indicates configuration information of repeated transmission of a first message in a random access procedure, and the first message carries contention resolution information; and send the first message based on the configuration information via the communication unit 901.

For example, an MCS field or a downlink assignment index field in the DCI indicates a quantity of repeated transmissions of the first message; or a downlink assignment index field in the DCI indicates repeated transmission or non-repeated transmission of the first message, and an MCS field in the DCI indicates a quantity of repeated transmissions of the first message when the downlink assignment index field indicates repeated transmission of the first message; or an MCS field in the DCI indicates repeated transmission or non-repeated transmission of the first message, and a downlink assignment index field in the DCI indicates a quantity of repeated transmissions of the first message when the MCS field indicates repeated transmission of the first message.

Optionally, the processing unit 902 is further configured to send second information via the communication unit 901, where the second information indicates a priority of repeated transmission of the first message.

In an implementation, the communication apparatus may be specifically configured to implement the method performed by the terminal device in the embodiment in FIG. 8. The apparatus may be the terminal device, or may be a chip or a chip set in the terminal device, or a part of the chip that is configured to perform a related method function. The processing unit 902 is configured to: receive an RAR UL grant via the communication unit 901, where the RAR UL grant indicates configuration information of repeated transmission of a first message in a random access procedure, and the first message carries contention resolution information; and receive the first message based on the configuration information via the communication unit 901.

For example, the time domain resource assignment field in the RAR UL grantI indicates the configuration information of repeated transmission of the first message.

For example, N statuses of the time domain resource assignment field one-to-one correspond to N repeated transmissions, and N is an integer greater than 0.

For example, a frequency domain resource assignment field and a frequency hopping field in the RAR UL grant indicate the configuration information of repeated transmission of the first message.

For example, P bits indicate a quantity of repeated transmissions of the first message, the P bits include at least one bit in the frequency domain resource assignment field and at least one bit in the frequency hopping field, and P is an integer greater than 1.

Optionally, the processing unit 902 is further configured to receive second information via the communication unit 901, where the second information indicates a priority of repeated transmission of the first message.

In an implementation, the communication apparatus may be specifically configured to implement the method performed by the network device in the embodiment in FIG. 8. The apparatus may be the network device, may be a chip or a chip set in the network device, or a part of the chip that is configured to perform a related method function. The processing unit 902 is configured to: send an RAR UL grant via the communication unit 901, where the RAR UL grant indicates configuration information of repeated transmission of a first message in a random access procedure, and the first message carries contention resolution information; and send the first message based on the configuration information via the communication unit 901.

For example, a time domain resource assignment field in the RAR UL grant indicates the configuration information of repeated transmission of the first message.

For example, N statuses of the time domain resource assignment field one-to-one correspond to N repeated transmissions, and N is an integer greater than 0.

For example, a frequency domain resource assignment field and a frequency hopping field in the RAR UL grant indicate the configuration information of repeated transmission of the first message.

For example, P bits indicate a quantity of repeated transmissions of the first message, the P bits include at least one bit in the frequency domain resource assignment field and at least one bit in the frequency hopping field, and P is an integer greater than 1.

Optionally, the processing unit 902 is further configured to send second information via the communication unit 901, where the second information indicates a priority of repeated transmission of the first message.

Division into the modules in embodiments of this application is an example, is only division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for functions or implementations of the modules in this embodiment of this application, further refer to related description in the method embodiments.

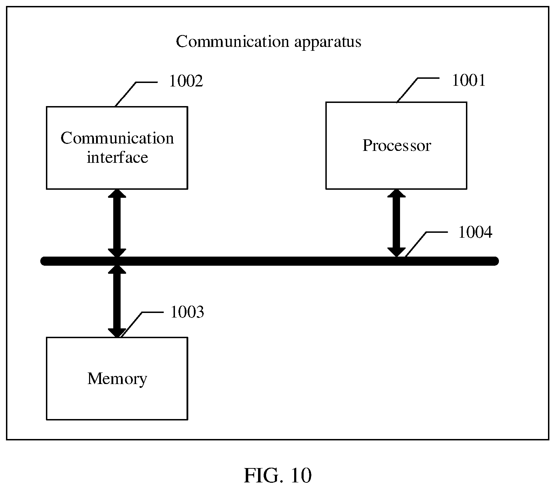

In a possible manner, the communication apparatus may be shown in FIG. 10. The apparatus may be a communication device or a chip in the communication device. The communication device may be the terminal device in the foregoing embodiments, or may be the network device in the foregoing embodiments. The apparatus includes a processor 1001 and a communication interface 1002, and may further include a memory 1003. The processing unit 902 may be the processor 1001. The communication unit 901 may be the communication interface 1002. Optionally, the processor 1001 and the memory 1003 may alternatively be integrated together.

The processor 1001 may be a CPU, a digital processing unit, or the like. The communication interface 1002 may be a transceiver, an interface circuit like a transceiver circuit, a transceiver chip, or the like. The apparatus further includes the memory 1003, configured to store a program executed by the processor 1001. The memory 1003 may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory 1003 is any other medium that can carry or store expected program code in a form of instructions or a data structure and that can be accessed by a computer, but is not limited thereto.

The processor 1001 is configured to execute the program code stored in the memory 1003, and is specifically configured to perform an action of the processing unit 902. Details are not described herein again in this application. The communication interface 1002 is specifically configured to perform an action of the communication unit 901. Details are not described herein again in this application.

A specific connection medium between the communication interface 1002, the processor 1001, and the memory 1003 is not limited in embodiments of this application. In this embodiment of this application, the memory 1003, the processor 1001, and the communication interface 1002 are connected through a bus 1004 in FIG. 10. The bus is represented by using a thick line in FIG. 10. A connection manner between other components is merely an example for description, and is not limited thereto. The bus may be classified into an address bus, a data bus, a control bus, and the like. For ease of representation, only one bold line is for representing the bus in FIG. 10, but this does not mean that there is only one bus or only one type of bus.

An embodiment of the present invention further provides a computer-readable storage medium, configured to store computer software instructions that need to be executed for execution of the foregoing processor, and the computer-readable storage medium includes a program that needs to be executed for execution of the foregoing processor.

An embodiment of this application further provides a communication system, including a communication apparatus configured to implement a function of the terminal device in the embodiment in FIG. 6 and a communication apparatus configured to implement a function of the network device in the embodiment in FIG. 6.

An embodiment of this application further provides a communication system, including a communication apparatus configured to implement a function of the terminal device in the embodiment in FIG. 7 and a communication apparatus configured to implement a function of the network device in the embodiment in FIG. 7.

An embodiment of this application further provides a communication system, including a communication apparatus configured to implement a function of the terminal device in the embodiment in FIG. 8 and a communication apparatus configured to implement a function of the network device in the embodiment in FIG. 8.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a CD-ROM, and an optical memory) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a procedure and/or a block in the flowcharts and/or the block diagrams. The computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

The computer program instructions may be stored in a computer-readable storage that can instruct the computer or any other programmable data processing device to work in a specific manner, so that the instructions stored in the computer-readable storage generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method comprises:
sending first information, wherein the first information is used to request a network device to send a first message in a random access procedure in a repeated transmission manner, the first message carries contention resolution information, and the first information comprises at least one of the following: a preamble or a logical channel identifier; and
receiving the first message.

2. The method according to claim 1, wherein that the first information is used to request the network device to send the first message in a random access procedure through repeated transmission comprises at least one of the following:
the first information comprises a first preamble, and the first preamble is used to request to send the first message in a repeated transmission manner; or
the first information is carried in a first random access resource, and the first random access resource is used to request to send the first message in a repeated transmission manner; or
the first information comprises a first logical channel identifier, and the first logical channel identifier is used to request to send the first message in a repeated transmission manner.

3. The method according to claim 2, wherein the first preamble belongs to a preamble set, the preamble set may further comprise a second preamble, the second preamble indicates repeated transmission of a second message in a random access procedure, and the second message is carried on a physical uplink shared channel; or
the first preamble is further used to request to send a second message in a random access procedure in a repeated transmission manner, and the second message is carried on a physical uplink shared channel.

4. The method according to claim 2 or 3, wherein a value of the first logical channel identifier is 39, 40, 41, 42, or 47.

5. The method according to claim 1 or 2, wherein before sending the first information, the method further comprises:
receiving second information, wherein the second information indicates a priority of repeated transmission of the first message.

6. A communication method, wherein the method comprises:
receiving first information, wherein the first information is used to request a network device to send a first message in a random access procedure through repeated transmission, the first message carries contention resolution information, and the first information comprises at least one of the following: a preamble or a logical channel identifier; and
sending the first message in a repeated transmission manner.

7. The method according to claim 6, wherein that the first information is used to request the network device to send the first message in a random access procedure through repeated transmission comprises at least one of the following:
the first information comprises a first preamble, and the first preamble is used to request to send the first message in a repeated transmission manner; or
the first information is carried in a first random access resource, and the first random access resource is used to request to send the first message in a repeated transmission manner; or
the first information comprises a first logical channel identifier, and the first logical channel identifier is used to request to send the first message in a repeated transmission manner.

8. The method according to claim 7, wherein the first preamble belongs to a preamble set, the preamble set may further comprise a second preamble, the second preamble indicates repeated transmission of a second message in a random access procedure, and the second message is carried on a physical uplink shared channel; or
the first preamble is further used to request to send a second message in a random access procedure in a repeated transmission manner, and the second message is carried on a physical uplink shared channel.

9. The method according to claim 7 or 8, wherein a value of the first logical channel identifier is 39, 40, 41, 42, or 47.

10. The method according to claim 6 or 7, wherein before receiving the first information, the method further comprises:
sending second information, wherein the second information indicates a priority of repeated transmission of the first message.

11. A communication method, wherein the method comprises:
receiving downlink control information DCI, wherein the DCI is scrambled by using a temporary cell-radio network temporary identifier TC-RNTI, the DCI indicates configuration information of repeated transmission of a first message in a random access procedure, and the first message carries contention resolution information; and
receiving the first message based on the configuration information.

12. The method according to claim 11, wherein that the DCI indicates the configuration information of repeated transmission of the first message in a random access procedure comprises:
a modulation and coding scheme MCS field or a downlink assignment index field in the DCI indicates a quantity of repeated transmissions of the first message; or
a downlink assignment index field in the DCI indicates repeated transmission or non-repeated transmission of the first message, and an MCS field in the DCI indicates a quantity of repeated transmissions of the first message when the downlink assignment index field indicates repeated transmission of the first message; or
an MCS field in the DCI indicates repeated transmission or non-repeated transmission of the first message, and a downlink assignment index field in the DCI indicates a quantity of repeated transmissions of the first message when the MCS field indicates repeated transmission of the first message.

13. The method according to claim 11 or 12, wherein the method further comprises:
receiving second information, wherein the second information indicates a priority of repeated transmission of the first message.

14. A communication method, wherein the method comprises:
sending downlink control information DCI, wherein the DCI is scrambled by using a temporary cell-radio network temporary identifier TC-RNTI, the DCI indicates configuration information of repeated transmission of a first message in a random access procedure, and the first message carries contention resolution information; and
sending the first message based on the configuration information.

15. The method according to claim 14, wherein that the DCI indicates the configuration information of repeated transmission of the first message in a random access procedure comprises:
a modulation and coding scheme MCS field or a downlink assignment index field in the DCI indicates a quantity of repeated transmissions of the first message; or
a downlink assignment index field in the DCI indicates repeated transmission or non-repeated transmission of the first message, and an MCS field in the DCI indicates a quantity of repeated transmissions of the first message when the downlink assignment index field indicates repeated transmission of the first message; or
an MCS field in the DCI indicates repeated transmission or non-repeated transmission of the first message, and a downlink assignment index field in the DCI indicates a quantity of repeated transmissions of the first message when the MCS field indicates repeated transmission of the first message.

16. The method according to claim 14 or 15, wherein the method further comprises:
sending second information, wherein the second information indicates a priority of repeated transmission of the first message.

17. A communication method, wherein the method comprises:
receiving a random access response uplink grant RAR UL grant, wherein the RAR UL grant indicates configuration information of repeated transmission of a first message in a random access procedure, and the first message carries contention resolution information; and
receiving the first message based on the configuration information.

18. The method according to claim 17, wherein that the RAR UL grant indicates the configuration information of repeated transmission of the first message in a random access procedure comprises:
a time domain resource assignment field in the RAR UL grant indicates the configuration information of repeated transmission of the first message.

19. The method according to claim 18, wherein N statuses of the time domain resource assignment field one-to-one correspond to N repeated transmissions, and N is an integer greater than 0.

20. The method according to claim 17, wherein that the RAR UL grant indicates the configuration information of repeated transmission of the first message in a random access procedure comprises:
a frequency domain resource assignment field and a frequency hopping field in the RAR UL grant indicate the configuration information of repeated transmission of the first message.

21. The method according to claim 20, wherein that the frequency domain resource assignment field and the frequency hopping field indicate the configuration information of repeated transmission of the first message comprises:
P bits indicate a quantity of repeated transmissions of the first message, the P bits comprise at least one bit in the frequency domain resource assignment field and at least one bit in the frequency hopping field, and P is an integer greater than 1.

22. The method according to any one of claims 17 to 21, wherein the method further comprises:
receiving second information, wherein the second information indicates a priority of repeated transmission of the first message.

23. A communication method, wherein the method comprises:
sending a random access response uplink grant RAR UL grant, wherein the RAR UL grant indicates configuration information of repeated transmission of a first message in a random access procedure, and the first message carries contention resolution information; and
sending the first message based on the configuration information.

24. The method according to claim 23, wherein that the RAR UL grant indicates the configuration information of repeated transmission of the first message in a random access procedure comprises:
a time domain resource assignment field in the RAR UL grant indicates the configuration information of repeated transmission of the first message.

25. The method according to claim 24, wherein N statuses of the time domain resource assignment field one-to-one correspond to N repeated transmissions, and N is an integer greater than 0.

26. The method according to claim 23, wherein that the RAR UL grant indicates the configuration information of repeated transmission of the first message in a random access procedure comprises:
a frequency domain resource assignment field and a frequency hopping field in the RAR UL grant indicate the configuration information of repeated transmission of the first message.

27. The method according to claim 26, wherein that the frequency domain resource assignment field and the frequency hopping field indicate the configuration information of repeated transmission of the first message comprises:
P bits indicate a quantity of repeated transmissions of the first message, the P bits comprise at least one bit in the frequency domain resource assignment field and at least one bit in the frequency hopping field, and P is an integer greater than 1.

28. The method according to any one of claims 23 to 27, wherein the method further comprises:
sending second information, wherein the second information indicates a priority of repeated transmission of the first message.

29. A communication apparatus, comprising a unit or a module configured to perform the method according to any one of claims 1 to 5, or comprising a unit or a module configured to perform the method according to any one of claims 6 to 10, or comprising a unit or a module configured to perform the method according to any one of claims 11 to 13, or comprising a unit or a module configured to perform the method according to any one of claims 14 to 16, or comprising a unit or a module configured to perform the method according to any one of claims 17 to 22, or comprising a unit or a module configured to perform the method according to any one of claims 23 to 28.

30. A computer-readable storage medium, wherein the computer storage medium stores computer-readable instructions, and when the computer-readable instructions are run on a communication apparatus, the method according to any one of claims 1 to 5 is performed, or the method according to any one of claims 6 to 10, or the method according to any one of claims 11 to 13, or the method according to any one of claims 14 to 16, or the method according to any one of claims 17 to 22, or the method according to any one of claims 23 to 28 is performed.

31. A computer program product, wherein when the computer program product runs on a device, the device is enabled to perform the method according to any one of claims 1 to 28.
